# EUROPEAN PATENT APPLICATION

(11) **EP 2 894 032 A1**
(43) Date of publication of application: **15.07.2015**
(21) Application number: 13853154.6
(22) Date of filing: 11.11.2013
(51) Int. Cl.: B32B 37/16, B41M 5/00, B41M 5/50, B41M 5/52, B44C 1/17

(54) **METHOD FOR MANUFACTURING LAMINATE**

(30) Priority: 12.11.2012 JP 2012248834
(71) Applicant: Mimaki Engineering Co., Ltd., Tomi-shi, Nagano 389-0512 (JP)
(72) Inventor: OHNISHI, Masaru, Tomi-city Nagano 389-0512 (JP)
(74) Representative: Hinkelmann, Klaus
(86) International application number: PCT/JP2013/080423
(87) International publication number: WO 2014/073679

(57) **Abstract**

An objective of the present invention is to provide a technology for forming an image having a three-dimensional appearance, at low cost or in a short delivery time, in a method of forming an image by way of transfer. A means to solve the issue is a method for manufacturing a laminate; the method including; a step of forming a stereoscopic layer for forming a stereoscopic layer (2) by way of applying ink, containing a solid component, onto a base material (1); and a step of transfer for transferring a metallic layer (7) onto the stereoscopic layer (2) by way of pushing a transfer film (4), provided with the metallic layer (7), against the stereoscopic layer (2).

## Description

### [Field of the Invention]

The present invention relates to a technology of forming an image by way of transfer, and especially relates to a technology of forming an image having a three-dimensional appearance.

### [Background]

A technology of forming an image by way of transfer is known. For example, in order to form an image having glossiness on a base material, usually used is a method in which a transfer is carried out by using a metallic layer as a transfer layer.

A method called "foil-press printing" or "foil-transfer printing" using letterpress is known as a method for transferring a transfer layer, such as a metallic layer, onto a base material. Moreover, Patent Document 1 describes an image forming method for transferring an ink image to a recording medium, by way of having the recording medium contact the ink image formed on an intermediate transfer member, the ink image including an element that becomes hardened by irradiation of active energy rays; and the image forming method includes a step of supplying ink to form the ink image by use of an inkjet head, and a step of irradiating the ink image with the active energy rays, while the recording medium is in contact with the ink image on the intermediate transfer member.

### [Prior Art Document]

### [Patent Document]

[Patent Document 1] Japanese Unexamined Patent Application Publication No. 2010-143073 (published on July 1, 2010)

### [Summary of Invention]

### [Problem to Be Solved]

Unfortunately any of the methods according to the conventional technology is in relation to forming a planar image. Incidentally, in a method of forming an image by way of transfer, considered for forming an image having a three-dimensional appearance are a method of conducting embossment on a base material onto which a planar image has been transferred, and a method of conducting transfer onto a base material on which a three-dimensional structure has already been formed by way of plastics molding, carving and the like. Unfavorably, for conducting any of these methods, it becomes necessary to carry out embossment or a process of manufacturing a metal mold for molding or carving and the like, so as to lead to increasing a cost, increasing time up to a delivery, and the like. Therefore, these methods are especially inadequate for low-volume high-mix manufacturing.

For giving a solution to the above issue, it is a principal objective of the present invention to provide a technology for forming an image having a three-dimensional appearance, at low cost or in a short delivery time, in a method of forming an image by way of transfer.

### [Means to Solve the Problem]

To give a solution to the above issue, a method for manufacturing a laminate according to the present invention is a method for manufacturing a laminate in which a base material, a stereoscopic layer, and a transfer layer are laminated, the method comprising: a step of forming a stereoscopic layer for forming the stereoscopic layer by way of applying ink, containing a solid component, onto the base material; and a step of transfer for transferring the transfer layer onto the stereoscopic layer by way of pushing a transfer film, provided with the transfer layer, against the stereoscopic layer.

According to the configuration described above, the stereoscopic layer having a stereoscopic structure can be formed on the base material, by way of applying the ink containing a solid component, onto the base material, without manufacturing a mold and the like. Then, by way of pushing the transfer film, provided with the transfer layer, against the stereoscopic layer that has been formed, in order to transfer the transfer layer, an image having a three-dimensional appearance can be formed. In other words, according to the configuration described above, because of no necessity of manufacturing a mold and the like, the image having a three-dimensional appearance can be formed, at low cost or in a short delivery time.

In the method for manufacturing a laminate according to the present invention, it is preferable that the ink contains ultraviolet curable resins, and in the step of forming a stereoscopic layer, the applied ink is irradiated with ultra-violet rays.

According to the configuration described above, the stereoscopic layer can suitably be formed by use of the ink (UV ink) containing ultraviolet curable resins.

In the step of forming a stereoscopic layer of the method for manufacturing a laminate according to the present invention, it is preferable that the ink is applied by using an inkjet means.

According to the configuration described above, the stereoscopic layer having a desired shape can easily be formed, by using the inkjet means.

In the step of transfer of the method for manufacturing a laminate according to the present invention, it is preferable that the base material and the transfer film are laminated together, and placed in a container that has at least partially a flexible section, and then pressure in the container is reduced, so that the flexible section of the container presses the transfer film; while the flexible section is facing the transfer film.

According to the configuration described above, by way of reducing the pressure in the container in which the base material and the transfer film being laminated together are placed, the flexible section of the container closely contacts with the transfer film so as to press the transfer film by atmospheric pressure; wherein the flexible section is facing the transfer film. Thus, the transfer film is pushed against the base material (the stereoscopic layer on the base material) so that the transfer layer can successfully be transferred onto the stereoscopic layer in a simple manner.

The method for manufacturing a laminate according to the present embodiment may include a step of forming an adhesive layer for forming an adhesive layer by way of applying an adhesive onto the stereoscopic layer, after the step of forming a stereoscopic layer and before the step of transfer; and in the step of transfer, the stereoscopic layer and the transfer layer may adhere to each other by the intermediary of the adhesive layer.

According to the configuration described above, by way of forming the adhesive layer on the stereoscopic layer, after forming the stereoscopic layer, for example, the transfer layer adheres only to the stereoscopic layer so that the transfer layer can be transferred only to the stereoscopic layer. Thus, according to the configuration described above, the transfer layer can be transferred to a desired area.

In the method for manufacturing a laminate described above, it is preferable that the adhesive contains ultraviolet curable resins or thermoplastic resins; and in the step for transfer, the adhesive layer is irradiated with ultra-violet rays, or heated up.

According to the configuration described above, since the adhesive contains ultraviolet curable resins or thermoplastic resins, the stereoscopic layer and the transfer layer can successfully adhere to each other, by way of irradiating the adhesive layer with ultra-violet rays or heating up the adhesive layer, under the condition where the transfer layer is pushed against the stereoscopic layer by the intermediary of the adhesive layer.

In the method for manufacturing a laminate described above, it is preferable that the adhesive is applied by an inkjet means in the step of forming an adhesive layer.

According to the configuration described above, since the adhesive is applied by using the inkjet means, an area where the adhesive layer is formed and the transfer layer is eventually transferred can be controlled in a highly-accurate manner. Thus, an accuracy of a position at which the transfer layer is transferred can be improved.

In the method for manufacturing a laminate according to the present invention, the transfer film may be provided with an adhesive layer; and in the step of transfer, the stereoscopic layer and the transfer layer may adhere to each other by the intermediary of the adhesive layer.

According to the configuration described above, the stereoscopic layer and the transfer layer adhere to each other by the intermediary of the adhesive layer which the transfer film is provided with, in such a way that the transfer layer can successfully be transferred.

In the method for manufacturing a laminate according to the present invention, the transfer layer may contain at least any one chosen out of a group composed of a metallic layer, a hologram film layer, a coloring layer, a white color layer, a transparent layer, a fluorescent layer, a light accumulating layer, and a stealth ink layer.

According to the configuration described above, the laminate, to which a transfer layer, such as a metallic layer, a hologram film layer, a coloring layer, a white color layer, a transparent layer, a fluorescent layer, a light accumulating layer, and a stealth ink layer is transferred, can successfully be manufactured.

In the method for manufacturing a laminate according to the present invention, the transfer film further may include a protection layer; and in the step of transfer, the protection layer may be transferred together with the transfer layer, in such a way that the protection layer is located at an opposite side of the stereoscopic layer in relation to the transfer layer.

According to the configuration described above, the protection layer is transferred in such a way that the protection layer is located at an opposite side of the stereoscopic layer in relation to the transfer layer; and therefore, in the laminate, the protection layer can be provided on the transfer layer. Thus, the transfer layer can suitably be protected.

### [Advantageous Effect of the Invention]

According to the present invention, it becomes possible to form an image having a three-dimensional appearance, at low cost or in a short delivery time, in a method of forming an image by way of transfer.

### [Brief Description of the Drawings]

FIG. 1 is a schematic view illustrating a start status in a method of manufacturing a laminate in relation to embodiments (first through fourth embodiments) according to the present invention.
FIG. 2 is a schematic view illustrating a step of forming a stereoscopic layer in the method of manufacturing a laminate in relation to the embodiments (first through fourth embodiments) according to the present invention.
FIG. 3 is a schematic view illustrating a step of transfer in a method of manufacturing a laminate in relation to an embodiment (a first embodiment) according to the present invention.
FIG. 4A and FIG. 4B are schematic views illustrating the step of transfer and its variation, in the method of manufacturing a laminate in relation to the embodiment (the first embodiment) according to the present invention.
FIG. 5 is a schematic view illustrating a finish status in the method of manufacturing a laminate in relation to the embodiment (the first embodiment) according to the present invention.
FIG. 6 is a schematic view illustrating a step of forming an adhesive layer in a method of manufacturing a laminate in relation to an embodiment (a second embodiment) according to the present invention.
FIG. 7 is a schematic view illustrating a step of transfer in the method of manufacturing a laminate in relation to the embodiment (the second embodiment) according to the present invention.
FIG. 8A and FIG. 8B are schematic views illustrating the step of transfer and its variation, in the method of manufacturing a laminate in relation to the embodiment (the second embodiment) according to the present invention.
FIG. 9 is a schematic view illustrating a finish status in the method of manufacturing a laminate in relation to the embodiment (the second embodiment) according to the present invention.
FIG. 10 is a schematic view illustrating a step of transfer in a method of manufacturing a laminate in relation to an embodiment (a third embodiment) according to the present invention.
FIG. 11 is a schematic view illustrating a finish status in the method of manufacturing a laminate in relation to the embodiment (the third embodiment) according to the present invention.
FIG. 12 is a schematic view illustrating a step of transfer in a method of manufacturing a laminate in relation to an embodiment (a fourth embodiment) according to the present invention.
FIG. 13 is a schematic view illustrating a finish status in the method of manufacturing a laminate in relation to the embodiment (the fourth embodiment) according to the present invention.

### [Description of the Preferred Embodiments]

### (First embodiment)

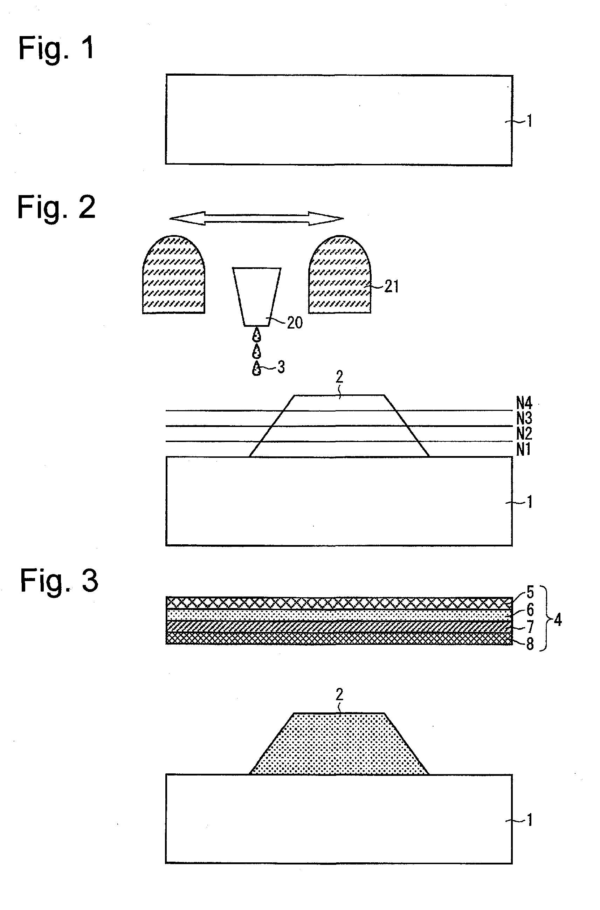

An embodiment (a first embodiment) according to the present invention is explained below with reference to FIG. 1, FIG. 2, FIG. 3, FIG. 4A, FIG. 4B and FIG. 5. FIG. 1 is a schematic view illustrating a start status in a method of manufacturing a laminate in relation to the present embodiment, and it shows a base material 1 onto which a metallic layer 7 is transferred. As the base material 1, being not limited to anything in particular, one of a planar base material, a film base material and the like that are made of, for example, a plastic-molded material, metals of stainless steel, brass, and the like, a glass material, stone, a cloth, and so on can be used.

### (Step of forming a stereoscopic layer)

In the method of manufacturing a laminate in relation to the present embodiment, a step of forming a stereoscopic layer is carried out at first. FIG. 2 is a schematic view illustrating a step of forming a stereoscopic layer in the present embodiment. In the step of forming a stereoscopic layer, a stereoscopic layer 2 is formed by way of applying UV (ultra-violet) ink 3 onto the base material 1 by use of an inkjet head (an inkjet means) 20, as shown in FIG. 2. Incidentally, at the time, the stereoscopic layer 2 can suitably be formed by way of irradiating the applied UV ink 3 with ultra-violet rays, by use of a UV lamp 21, to harden the applied UV ink 3.

Any ink can be used as the UV ink 3, as far as the ink contains ultraviolet curable resins; and a solvent-dilution UV ink, in which a solvent is added, may be used for the ink. Moreover, with respect to a color of the UV ink 3, one of a clear color (transparent), a white color, a black color and so on may appropriately be chosen depending on the base material 1 and an application use. Incidentally, the ink used for forming the stereoscopic layer 2 is not limited to the UV ink 3, any ink can be used as far as it contains a solid component and little amount of volatile element. For example, latex ink and the like, which is so controlled as to contain 5 to 20 weight percent of solid component, can suitably be used instead of the UV ink 3.

Moreover, although applying the UV ink 3 may be carried out just only one time, preferably the UV ink 3 should be applied several times for a laminating process. Applying the ink may be carried out four times for N1 through N4 as shown in FIG. 2, and all the requirement is that applying the ink may be carried out as many times as required for a three-dimensional structure that is needed. Being made up with separate multiple layers, the stereoscopic layer 2 can be so formed as to have a more freely-designed shape and a more deeply-designed form. A shape to be obtained at each time of laminating by way of applying the UV ink 3 should be made in such a way that a three-dimensional shape of the stereoscopic layer 2 to be built is materialized by a cross-sectional form of each layer obtained by splitting the stereoscopic layer 2, which can be formed by one-time applying performance of the UV ink 3, in a height direction.

### (Step of transfer)

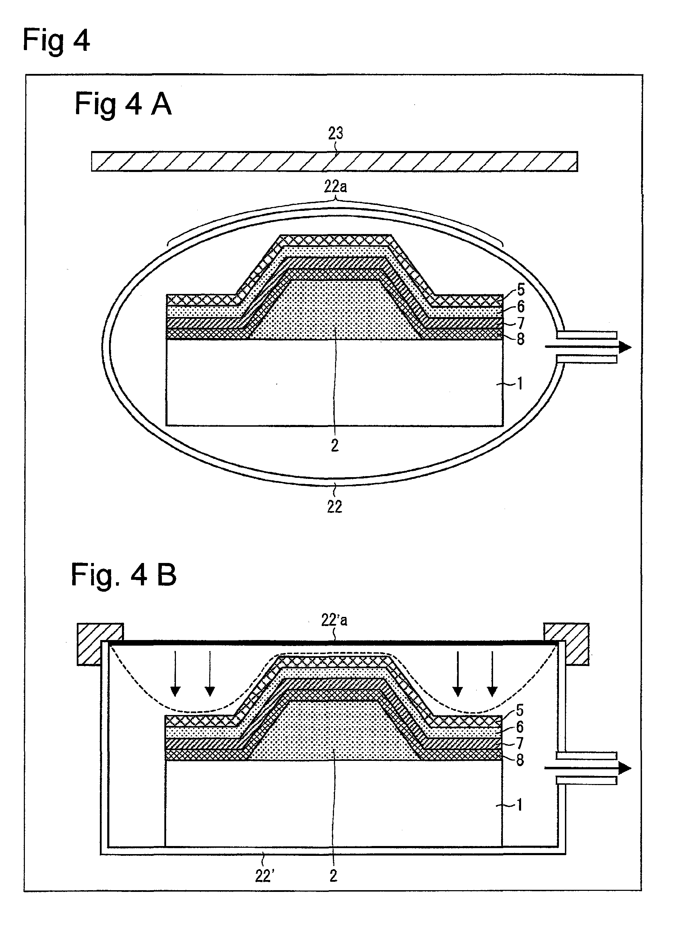

A step of transfer is executed next. FIG. 3 and FIG. 4 are schematic views illustrating a step of transfer in the present embodiment. In the step of transfer according to the present embodiment, the step of transfer is executed by use of a transfer film 4, such as shown in FIG. 3. The transfer film 4 is provided with a structure in which a release layer 6, a metallic layer 7, and an adhesive layer 8 are laminated in due order on a base film 5. Among these layers, the metallic layer 7 corresponds to a transfer layer to be transferred in the step of transfer according to the present embodiment.

The metallic layer 7 can be a metallic foil fixed on the release layer 6, or a metallic film, such as an aluminum film, formed on the release layer 6 by way of vapor deposition, sputtering, and the like. Moreover, a surface of the metallic layer 7 may be matted beforehand, according to an application use.

Incidentally, a transfer layer to be transferred in the step of transfer is not limited to the metallic layer 7; and it may be one of a hologram film layer, a coloring layer of pigment or dye, a white color layer, a transparent layer (including a translucent layer), a fluorescent layer, a light accumulating layer, a stealth ink layer, and the like. Moreover, in the transfer layer, a coloring layer having a color, a pattern and the like may be added as well onto the metallic layer. By an addition of such a coloring layer, not only a simple metallic glossiness but also various colors, patterns, letters and the like can be added to the metallic layer. Furthermore, the metallic layer 7 itself may also be provided with coloring, patterning and so on.

The base film 5 is a film for supporting the metallic layer 7 and so on. The release layer 6 works for temporarily connecting the metallic layer 7 to the base film 5, and it holds the metallic layer 7 until the metallic layer 7 is bonded to the stereoscopic layer 2. Meanwhile, the adhesive layer 8 is an adhesive layer provided with an adhesive of a hot-melt type, which contains thermoplastic resin.

Then, as shown in FIG. 4A and FIG. 4B, with the transfer film 4 being placed on the base material 1 (so as to laminate the base material 1 and the transfer film 4 together in such a way that the stereoscopic layer 2 and the adhesive layer 8 face each other), the transfer film 4 and the base material 1 are stored in a plastic bag (a container) 22. In the present embodiment, a plastic bag made of a heatproof film of, for example, fluorine resin, polypropylene, extending PET (polyethylene-terephthalate), vinylidene chloride resin, and the like can be used as the plastic bag 22.

Then, while the pressure inside the plastic bag 22 is reduced with a vacuum pump etc., atmospheric pressure makes the transfer film 4 closely contact with the base material 1 on which the stereoscopic layer 2 is formed. In other words, while the pressure inside the plastic bag 22 is reduced, the plastic bag 22 closely contacts with the base material 1 and the transfer film 4, as if the plastic bag 22 were a vacuum-sealed package, in such a way as to hold down the base material 1 and the transfer film 4, so that a section 22a of the plastic bag 22 presses the transfer film 4 so as to push the transfer film 4 against the base material 1, wherein the section 22a is a part of the plastic bag 22 facing the transfer film 4. Under the condition, a heating means 23 such as an infrared heater increases a temperature of the adhesive layer 8 up to or higher than the melting point or the softening point of the adhesive layer 8, and then afterward the adhesive layer 8 is cooled down. As a result, after the adhesive layer 8 once becomes fluidized, it is hardened in such a way that the base material 1 (the stereoscopic layer 2 on the base material 1) and the metallic layer 7 can adhere to each other.

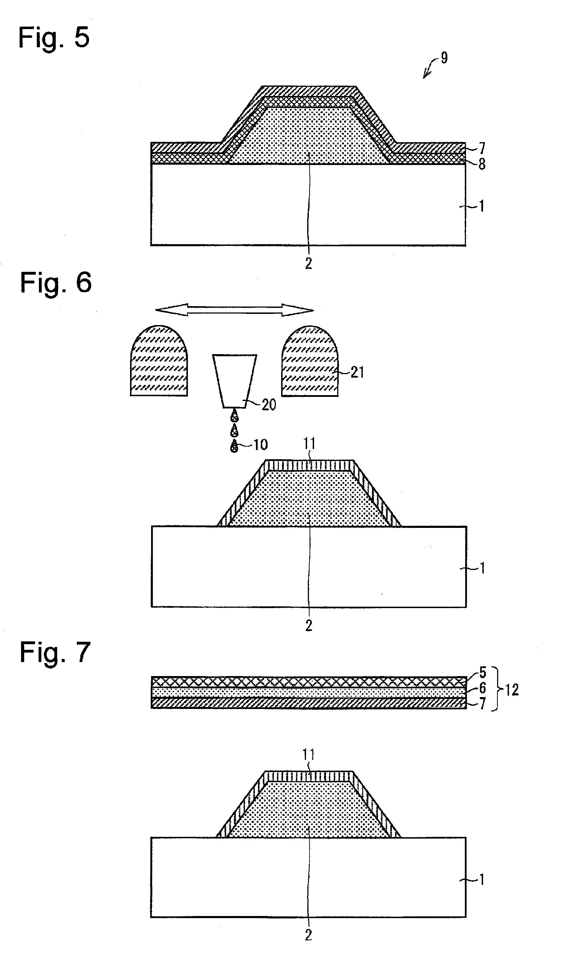

Subsequently, the condition of reduced pressure in the plastic bag 22 is canceled, and the base material 1 is taken out of the plastic bag 22, and then the base film 5 is peeled off. Consequently, the metallic layer 7 becomes peeled off from the release layer 6 so that there is completed a laminate 9 in which the metallic layer 7 is provided on the base material 1 (the stereoscopic layer 2 on the base material 1), as shown in FIG. 5.

Incidentally, instead of the plastic bag 22, there may be used a container 22' that can pres-connect by way of reducing the pressure while partially using a flexible film as shown in FIG. 4B. The container 22' includes a part 22'a, for example, made of the flexible film, and a laminated assembly of the base material 1 and the transfer film 4 is placed in the container 22' with the part 22'a facing the transfer film 4. While the pressure inside the container 22' is reduced with a vacuum pump etc., atmospheric pressure makes the transfer film 4 closely contact with the base material 1 on which the stereoscopic layer 2 is formed. In other words, while the pressure inside the container 22' is reduced, the part 22'a being flexible closely contacts with the transfer film 4 so as to press the transfer film 4, as shown in FIG. 4B (in a condition illustrated with a dotted line in FIG. 4B). Accordingly, in the same manner as the case with use of the plastic bag 22, the transfer film 4 is pushed against the base material 1. Then, by way of carrying out a heating process, a cooling process and so on, the base material 1 (the stereoscopic layer 2 on the base material 1) and the metallic layer 7 can adhere to each other.

### (Second embodiment)

Next, another embodiment (a second embodiment) according to the present invention is explained below with reference to FIG. 6, FIG. 7, FIG. 8A, FIG. 8B, and FIG. 9. In a method of manufacturing a laminate in relation to the present embodiment, operations up to the step of forming a stereoscopic layer are carried out in the same manner as those in the first embodiment. Then, after the step of forming a stereoscopic layer, a step of forming an adhesive layer is carried out before a step of transfer.

### (Step of forming an adhesive layer)

In the step of forming an adhesive layer according to the present embodiment, UV adhesive ink (an adhesive) 10 is applied to the stereoscopic layer 2 formed on the base material 1 by use of the inkjet head (an inkjet means) 20, as shown in FIG. 6. The UV adhesive ink 10 is not limited to anything in particular, as far as it contains ultraviolet curable resins of a radical polymerization type, a cation polymerization type, and the like. Then, being irradiated with ultra-violet rays having a controlled intensity by use of the UV lamp 21, the UV adhesive ink 10 is put into a semi-softened state so as to form an adhesive layer 11. Incidentally, the adhesive layer 11 may directly be formed by way of simply applying the UV adhesive ink 10, without the irradiation with ultra-violet rays.

Then, a step of transfer is executed next. In the step of transfer according to the present embodiment, a transfer film 12 is used. In the transfer film 12, the release layer 6 and the metallic layer 7 are laminated on the base film 5, as shown in FIG. 7. In the present embodiment, the transfer film 12 is not provided with any adhesive layer.

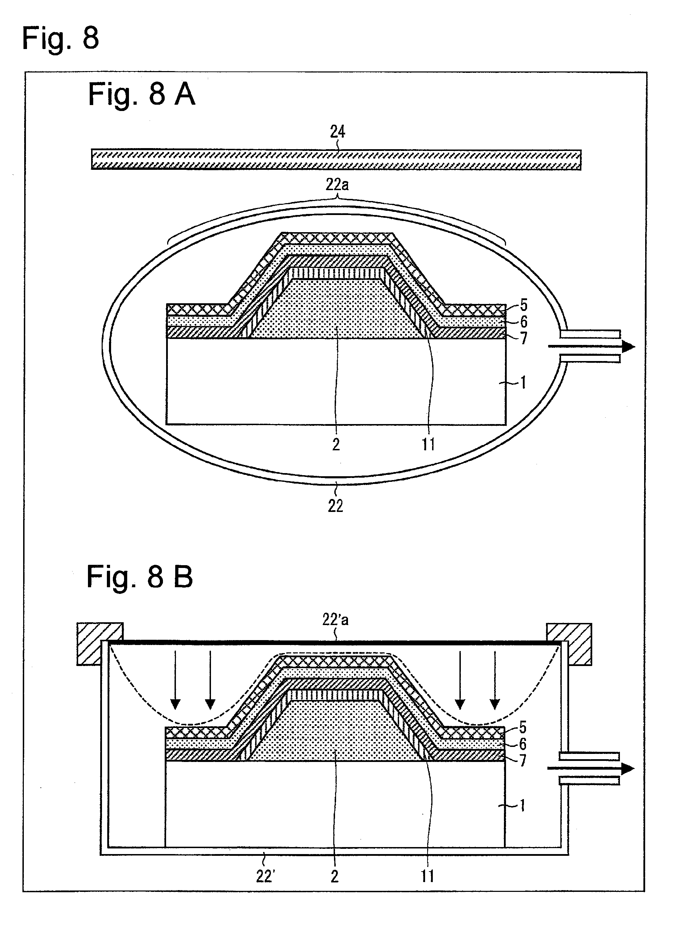

Then, as shown in FIG. 8A and FIG. 8B, with the transfer film 12 being placed on the base material 1 (so as to laminate the base material 1 and the transfer film 12 together in such a way that the adhesive layer 11 and the metallic layer 7 face each other), the base material 1 and the transfer film 12 are stored in the plastic bag (the container) 22 in the same manner as the first embodiment, and then the pressure inside the plastic bag 22 is reduced. In the present embodiment, a plastic bag that allows ultra-violet rays to pass through can be used as the plastic bag 22. With respect to a material of the plastic bag 22; for example, any of polyethylene, polypropylene, polyester, polyimide, polyamide, silicon rubber, poly-isoprene rubber, and the like can be used, and the material is not limited to them.

Then, by way of reducing the pressure inside the plastic bag 22, a section 22a of the plastic bag 22 presses the transfer film 12, wherein the section 22a is a part of the plastic bag 22 facing the transfer film 12, in such a way as to have the stereoscopic layer 2 and the metallic layer 7 stick to each other by the intermediary of the adhesive layer 11. Under the condition, being irradiated with ultra-violet rays by use of a UV lamp 24, the adhesive layer 11 is fully hardened. Thus, the stereoscopic layer 2 and the metallic layer 7 can adhere to each other. Incidentally, although irradiation of ultra-violet rays is carried out from a side of the transfer film 12 in FIG. 8A and FIG. 8B, the irradiation is not limited to this way; and the irradiation of ultra-violet rays may be carried out from a side of the base material 1 if the base material 1 is made of a material that allows ultra-violet rays to pass through.

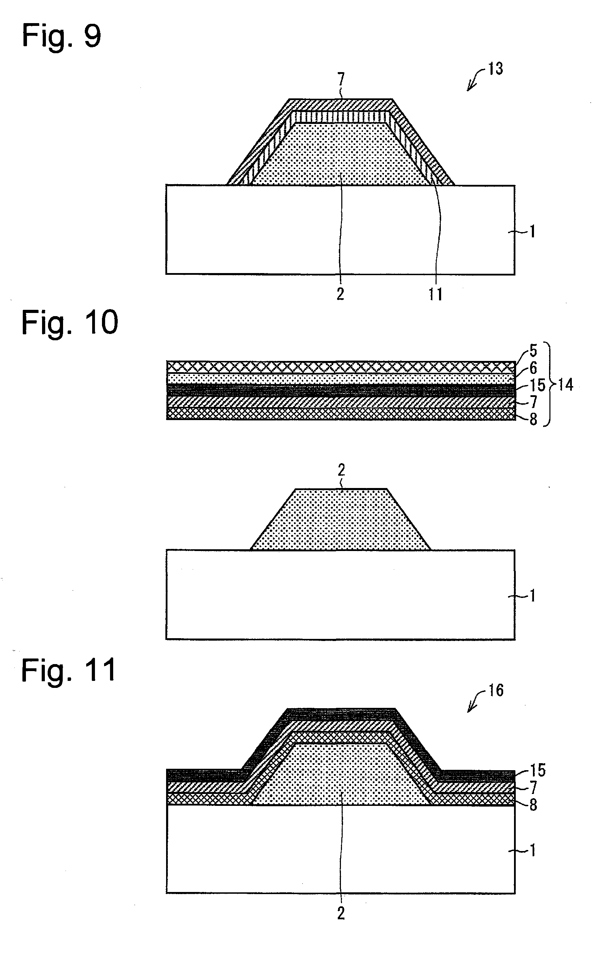

Subsequently, the condition of reduced pressure in the plastic bag 22 is canceled, and the base material 1 is taken out of the plastic bag 22, and then the base film 5 is peeled off. Consequently, the metallic layer 7 becomes peeled off from the release layer 6 so that there is completed a laminate 13 in which the metallic layer 7 is provided on the base material 1 (the stereoscopic layer 2 on the base material 1), as shown in FIG. 9. Incidentally, instead of the plastic bag 22, there may be used a container 22' partially including a flexible section, as shown in FIG. 8B, in the same manner as the first embodiment.

In the present embodiment, being different from the first embodiment, the metallic layer 7 is transferred only to a part where the adhesive layer 11 is formed (i.e., the part on the stereoscopic layer 2), as shown in FIG. 9. Therefore, even in the case where the transfer film 12 is thermally deformed, or the transfer film 12 is displaced due to any reason, the metallic layer 7 adheres and gets transferred only to an area where the adhesive layer 11 is formed. Accordingly, the metallic layer 7 is precisely transferred only onto the adhesive layer 11 placed on the stereoscopic layer 2. Especially when the UV adhesive ink 10 or the like is applied by an ink-jet method or the like, a forming position of the adhesive layer 11 can be controlled in a highly-accurate manner. Therefore, an accuracy of a transfer position of the metallic layer 7 can be improved.

### (Variation)

Incidentally, an adhesive for forming the adhesive layer 11 is not limited to the UV adhesive ink 10, and another adhesive may be used instead. For example, an adhesive of a hot-melt type, containing thermoplastic resins, may be used. In such a case, the stereoscopic layer 2 and the metallic layer 7 can adhere to each other in the step of transfer, by using the plastic bag 22, having a thermal resistance, and the heating means 23 in order to increase a temperature of the adhesive layer 11 up to or higher than the melting point or the softening point of the adhesive layer 11, and subsequently by cooling down the adhesive layer 11, in the same manner as the first embodiment.

### (Third embodiment)

Moreover, instead of the transfer film 4 in the first embodiment, a transfer film 14 as shown in FIG. 10 may be used. Being different from the transfer film 4, the transfer film 14 has a protection layer 15 laminated between the release layer 6 and the metallic layer 7. If the transfer film 14 is used in the step of transfer in order to transfer the protection layer 15 together with the metallic layer 7, in such a way that the protection layer 15 is located at an opposite side of the stereoscopic layer 2 in relation to the metallic layer 7, eventually a laminate 16 in which the metallic layer 7 is covered with the protection layer 15 can be obtained as shown in FIG. 11. Thus, the metallic layer 7 is protected with the protection layer 15 so as to be provided with tolerance for a defect, a stain such as a fingerprint, alcohol, water, ultra-violet rays, and so on. Moreover, coloring and patterning the protection layer 15 can further improve a power of expression.

### (Fourth embodiment)

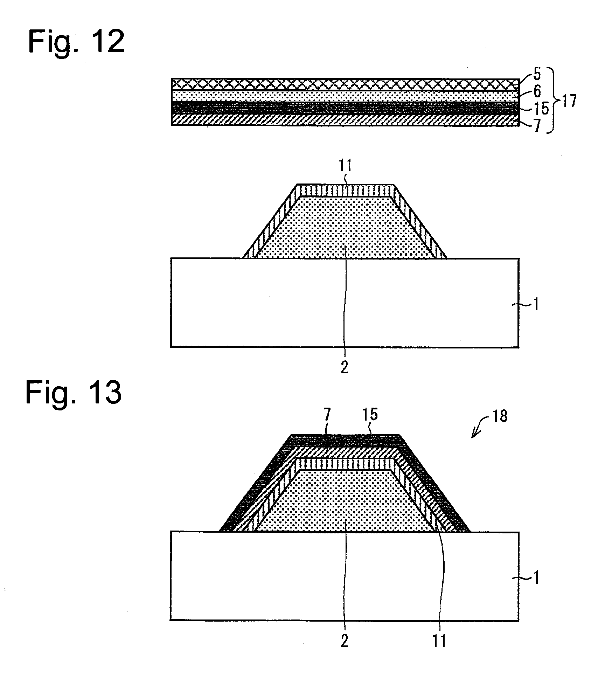

In the same way, instead of the transfer film 12 in the second embodiment, a transfer film 17 as shown in FIG. 12 may be used. Being different from the transfer film 12, the transfer film 17 has a protection layer 15 laminated between the release layer 6 and the metallic layer 7. If the transfer film 17 is used in the step of transfer in order to transfer the metallic layer 7 together with the protection layer 15, while the protection layer 15 being located at an opposite side of the stereoscopic layer 2 in relation to the metallic layer 7, eventually a laminate 18 in which the metallic layer 7 is covered with the protection layer 15 can be obtained as shown in FIG. 13. Thus, the metallic layer 7 is protected with the protection layer 15 so as to be provided with tolerance for a defect, a stain such as a fingerprint, alcohol, water, ultra-violet rays, and so on. Moreover, coloring and patterning the protection layer 15 can further improve a power of expression.

The present invention is not limited to those embodiments described above, and various modifications can be made within a scope defined in the claims. Any embodiment obtained as a result of arbitrarily combining technical means disclosed individually in different embodiments is also included in the technical scope of the present invention.

### (Appendant descriptions)

As described above, the methods for manufacturing the laminates according to the first through fourth embodiments are the methods for manufacturing the laminates 9, 13, 16, and 18; in which the base material 1, the stereoscopic layer 2, and a transfer layer (the metallic layer 7) are laminated; and each of the methods includes the step of forming a stereoscopic layer for forming the stereoscopic layer 2 by way of applying ink (the UV ink 3) containing a solid component, onto the base material 1, and the step of transfer for transferring a transfer layer (the metallic layer 7) onto the stereoscopic layer 2 by way of pushing one of the transfer films 4, 12, 14, and 17, provided with the transfer layer (the metallic layer 7), against the stereoscopic layer 2.

According to the configuration described above, the stereoscopic layer 2 having a stereoscopic structure can be formed on the base material 1, by way of applying the ink (the UV ink 3), containing a solid component, onto the base material 1, without manufacturing a mold and the like. Then, by way of pushing one of the transfer films 4, 12, 14, and 17, provided with the transfer layer (the metallic layer 7), against the stereoscopic layer 2 that has been formed, in order to transfer the transfer layer (the metallic layer 7), an image having a three-dimensional appearance can be formed. In other words, according to the configuration described above, because of no necessity of manufacturing a mold and the like, the image having a three-dimensional appearance can be formed, at low cost or in a short delivery time.

In the methods for manufacturing the laminates according to the first through fourth embodiments, the ink (UV ink 3) contains ultraviolet curable resins; and meanwhile in the above-described step of forming a stereoscopic layer, the applied ink (UV ink 3) is irradiated with ultra-violet rays.

According to the configuration described above, the stereoscopic layer 2 can suitably be formed by use of the ink (UV ink 3) containing ultraviolet curable resins.

In the above-described step of forming a stereoscopic layer of the methods for manufacturing the laminates according to the first through fourth embodiments, the ink (UV ink 3) is applied by using the inkjet means (the inkjet head 20).

According to the configuration described above, the stereoscopic layer 2 having a desired shape can easily be formed, by using the inkjet means (the inkjet head 20).

In the above-described step of transfer of the methods for manufacturing the laminates according to the first through fourth embodiments, the base material 1 and one of the transfer films 4, 12, 14, and 17 are laminated together, and they are placed in a container (the plastic bag 22 or the container 22') that has at least partially a flexible section, and then pressure in the container (the plastic bag 22 or the container 22') is reduced. Thus, a flexible section (the section 22a or the part 22'a) of the container (the plastic bag 22 or the container 22') presses the corresponding one of the transfer films 4, 12, 14, and 17; wherein the flexible section is facing the corresponding one of the transfer films 4, 12, 14, and 17.

According to the configuration described above, by way of reducing the pressure in the container (the plastic bag 22 or the container 22') in which the base material 1 and one of the transfer films 4, 12, 14, and 17 being laminated together are placed, the flexible section (the section 22a or the part 22'a) of the container (the plastic bag 22 or the container 22') closely contacts with the corresponding one of the transfer films 4, 12, 14, and 17 so as to press the corresponding one of the transfer films 4, 12, 14, and 17, by atmospheric pressure; wherein the flexible section is facing the corresponding the transfer film. Thus, the corresponding one of the transfer films 4, 12, 14, and 17 is pushed against the base material 1 (the stereoscopic layer 2 on the base material 1) so that the transfer layer (the metallic layer 7) can successfully be transferred onto the stereoscopic layer 2 in a simple manner.

The methods for manufacturing the laminates according to the second and fourth embodiments include the step of forming an adhesive layer for forming the adhesive layer 11 by way of applying the adhesive (the UV adhesive ink 10) onto the stereoscopic layer 2, after the above-described step of forming a stereoscopic layer and before the above-described step of transfer. Then, in the above-described step of transfer, the stereoscopic layer 2 and the transfer layer (the metallic layer 7) adhere to each other by the intermediary of the adhesive layer 11.

According to the configuration described above, by way of forming the adhesive layer 11 on the stereoscopic layer 2, after forming the stereoscopic layer 2, for example, the transfer layer (the metallic layer 7) adheres only to the stereoscopic layer 2 so that the transfer layer (the metallic layer 7) can be transferred only to the stereoscopic layer 2. Thus, according to the configuration described above, the transfer layer (the metallic layer 7) can be transferred to a desired area.

In the methods for manufacturing the laminates according to the second and fourth embodiments, the adhesive (for example, the UV adhesive ink 10) contains ultraviolet curable resins or thermoplastic resins; and then in the above-described step for transfer, the adhesive layer 11 is irradiated with ultra-violet rays, or heated up.

According to the configuration described above, since the adhesive (for example, the UV adhesive ink 10) contains ultraviolet curable resins or thermoplastic resins, the stereoscopic layer 2 and the transfer layer (the metallic layer 7) can successfully adhere to each other, by way of irradiating the adhesive layer 11 with ultra-violet rays or heating up the adhesive layer 11, under the condition where the transfer layer (the metallic layer 7) is pushed against the stereoscopic layer 2 by the intermediary of the adhesive layer 11.

In the methods for manufacturing the laminates according to the second and fourth embodiments, the adhesive described above is applied by using the inkjet means (the inkjet head 20), in the above-described step of forming an adhesive layer.

According to the configuration described above, since the adhesive (the UV adhesive ink 10) is applied by using the inkjet means (the inkjet head 20), an area where the adhesive layer 11 is formed and the transfer layer (the metallic layer 7) is eventually transferred can be controlled in a highly-accurate manner. Thus, an accuracy of a position at which the transfer layer (the metallic layer 7) is transferred can be improved.

In the methods for manufacturing the laminates according to the first and third embodiments, the transfer film 4 and the transfer film 14 are provided with the adhesive layer 8; and then in the above-described step of transfer, the stereoscopic layer 2 and the transfer layer (the metallic layer 7) adhere to each other by the intermediary of the adhesive layer 8.

According to the configuration described above, the stereoscopic layer 2 and the transfer layer (the metallic layer 7) adhere to each other by the intermediary of the adhesive layer 8 which the transfer film 4 and the transfer film 14 are provided with, in such a way that the transfer layer (the metallic layer 7) can successfully be transferred.

In the methods for manufacturing the laminates according to the first through fourth embodiments, the transfer layer (for example, the metallic layer 7) contains at least any one chosen out of a group composed of a metallic layer, a hologram film layer, a coloring layer, a white color layer, a transparent layer, a fluorescent layer, a light accumulating layer, and a stealth ink layer.

According to the configuration described above, the laminates 9, 13, 16 and 18, to which a transfer layer (for example, the metallic layer 7) such as a metallic layer, a hologram film layer, a coloring layer, a white color layer, a transparent layer, a fluorescent layer, a light accumulating layer, and a stealth ink layer is transferred, can successfully be manufactured.

In the methods for manufacturing the laminates according to the third and fourth embodiments, the transfer film 14 and the transfer film 17 further include the protection layer 15; and in the above-described step of transfer, the protection layer 15 may be transferred together with the transfer layer (the metallic layer 7), in such a way that the protection layer 15 is located at an opposite side of the stereoscopic layer 2 in relation to the transfer layer (the metallic layer 7).

According to the configuration described above, the protection layer 15 is transferred in such a way that the protection layer 15 is located at an opposite side of the stereoscopic layer 2 in relation to the transfer layer (the metallic layer 7) and therefore, in the laminates 16 and 18, the protection layer 15 can be provided on the transfer layer (the metallic layer 7). Thus, the transfer layer (the metallic layer 7) can suitably be protected.

### [Industrial Applicability]

The present invention can suitably be utilized in the printing industry and the manufacturing industry of a printing machine.

### [Reference Numerals]

- 1.: base material
- 2.: stereoscopic layer
- 3.: UV ink (ink)
- 4, 12, 14 & 17: transfer films
- 5.: base film
- 6.: release layer
- 7.: metallic layer (transfer layer)
- 8 & 11.: adhesive layers
- 9, 13, 16 and 18.: laminates
- 10.: UV adhesive ink (adhesive)
- 15.: protection layer
- 20.: inkjet head (inkjet means)
- 21 & 24.: UV lamps
- 22.: plastic bag (container)
- 22'.: container
- 23.: heating means

## Claims

1. A method for manufacturing a laminate in which a base material, a stereoscopic layer, and a transfer layer are laminated, the method comprising:
a step of forming a stereoscopic layer for forming the stereoscopic layer by way of applying ink, containing a solid component, onto the base material; and
a step of transfer for transferring the transfer layer onto the stereoscopic layer by way of pushing a transfer film, provided with the transfer layer, against the stereoscopic layer.

2. The method for manufacturing a laminate according to claim 1:
wherein the ink contains ultraviolet curable resins, and
in the step of forming a stereoscopic layer, the applied ink is irradiated with ultra-violet rays.

3. The method for manufacturing a laminate according to claim 1:
wherein, in the step of forming a stereoscopic layer, the ink is applied by using an inkjet means.

4. The method for manufacturing a laminate according to claim 1:
wherein, in the step of transfer, the base material and the transfer film are laminated together, and placed in a container that has at least partially a flexible section, and then pressure in the container is reduced, so that the flexible section of the container presses the transfer film; while the flexible section is facing the transfer film.

5. The method for manufacturing a laminate according to claim 1:
wherein the method includes a step of forming an adhesive layer for forming an adhesive layer by way of applying an adhesive onto the stereoscopic layer, after the step of forming a stereoscopic layer and before the step of transfer; and
in the step of transfer, the stereoscopic layer and the transfer layer adhere to each other by the intermediary of the adhesive layer.

6. The method for manufacturing a laminate according to claim 5:
wherein the adhesive contains ultraviolet curable resins or thermoplastic resins; and
in the step for transfer, the adhesive layer is irradiated with ultra-violet rays, or heated up.

7. The method for manufacturing a laminate according to claim 5:
wherein the adhesive is applied by an inkjet means in the step of forming an adhesive layer.

8. The method for manufacturing a laminate according to claim 1:
wherein the transfer film is provided with an adhesive layer; and
in the step of transfer, the stereoscopic layer and the transfer layer adhere to each other by the intermediary of the adhesive layer.

9. The method for manufacturing a laminate according to claim 1:
wherein the transfer layer contains at least any one chosen out of a group composed of a metallic layer, a hologram film layer, a coloring layer, a white color layer, a transparent layer, a fluorescent layer, a light accumulating layer, and a stealth ink layer.

10. The method for manufacturing a laminate according to any one of claim 1 through claim 9:
wherein the transfer film further includes a protection layer; and
in the step of transfer, the protection layer is transferred together with the transfer layer, in such a way that the protection layer is located at an opposite side of the stereoscopic layer in relation to the transfer layer.
